# EUROPEAN PATENT SPECIFICATION

(11) **EP 4 220 479 B1**
(45) Date of publication and mention of the grant of the patent: **09.04.2025**
(21) Application number: 21871339.4
(22) Date of filing: 14.09.2021
(51) Int. Cl.: G06V 10/70

(54) **SELF-TRAINING METHOD, SYSTEM, APPARATUS, ELECTRONIC DEVICE, AND STORAGE MEDIUM**
SELBSTTRAININGSVERFAHREN, SYSTEM, VORRICHTUNG, ELEKTRONISCHE VORRICHTUNG UND SPEICHERMEDIUM
PROCÉDÉ, SYSTÈME, APPAREIL, DISPOSITIF ÉLECTRONIQUE ET SUPPORT D'ENREGISTREMENT D'AUTO-ENTRAÎNEMENT

(30) Priority: 24.09.2020 CN 202011018277
(43) Date of publication of application: 02.08.2023
(73) Proprietor: Hangzhou Hikvision Digital Technology Co., Ltd., Hangzhou, Zhejiang 310051 (CN)
(72) Inventor: DONG, Maofei, Hangzhou, Zhejiang 310051 (CN)
(74) Representative: Goddar, Heinz J.
(86) International application number: PCT/CN2021/118262
(87) International publication number: WO 2022/062968

(56) References cited:
- CN-A- 111 210 024
- CN-A- 112 132 220
- US-A1- 2019 012 575
- RYOTA HINAMI ET AL: "Multimodal Co-Training for Selecting Good Examples from Webly Labeled Video", ARXIV.ORG, CORNELL UNIVERSITY LIBRARY, 201 OLIN LIBRARY CORNELL UNIVERSITY ITHACA, NY 14853, 17 April 2018 (2018-04-17), XP080871511

## Description

### TECHNICAL FIELD

**The** present disclosure relates to the technical field of artificial intelligence, in particular to a self-training method, a self-training system, a self-training apparatus, an electronic device and a storage medium.

### BACKGROUND

With the rapid development of artificial intelligence technology, application of an object detection models is becoming more and more extensive. The object detection models can be used to detect objects in an image, audio and other data.

In the related art, when obtaining the object detection model, it is usually necessary to collect a large number of sample data, and use the collected sample data to train the initial model, so as to obtain the trained model as the object detection model. In order to obtain an object detection model that can take into account various application scenarios, when collecting sample data, it is generally necessary to collect multiple sample data of objects with different attributes from multiple scenarios. However, in the actual application scenario, the input data of the object detection model is mainly concentrated in the data of the object containing some attributes. For example, when the above object is a vehicle, the attributes of the object include vans, lorries, business vehicles, cars, etc. When training the vehicle detection model, the collected sample data may include van images, lorry images, business vehicle images, car images, etc. If the trained vehicle detection model is applied to the urban traffic road scenario, the input data of the vehicle detection model mainly includes business vehicle images and car images.

Since the sample data used in training the object detection model is multiple data of objects with different attributes, the pertinence for data of objects with specific attributes is relatively weak. In actual application scenarios, the input data of the object detection model is generally the data of the objects with the specific attributes. Therefore, when the object detection model is applied to object detection, accuracy of a detection result is low.

CN111210024A discloses a model training method which can improve the model training efficiency. XP080871511 discloses multimodal co-training for selecting good examples from webly labeled video.

### SUMMARY

Embodiments of the present disclosure aim to provide a self-training method, a self-training system, a self-training apparatus, an electronic device and a storage medium to improve the accuracy of the object detection model for object detection. The specific technical solution is as follows.

According to a first aspect, an embodiment of the present disclosure provides a self-training method. The method includes:
obtaining multimedia data collected by a data collection device, and obtaining attribute information by detecting objects in the multimedia data through a first object detection model, where the first object detection model is a model currently used by the data collection device;
selecting, based on the attribute information of the objects in the multimedia data, data containing an object with a target attribute from the multimedia data as first sample data, where the target attribute is an attribute of the object in the multimedia data whose accuracy of a detection result obtained when the first object detection model detects the object in the multimedia data meets a preset self-training condition; and
training the first object detection model by using the first sample data to obtain a second object detection model,
where the method further includes: testing, based on test data, accuracy of the second object detection model for object detection to obtain a test result, where the test data includes at least one of existing test data or new test data, the existing test data is data already used for testing accuracy of the first object detection model for object detection, and the new test data is unused test data; and determining, based on the test result, whether to update the first object detection model in the data collection device to the second object detection model;
where the testing, based on the test data, the accuracy of the second object detection model for object detection to obtain the test result includes:
inputting the test data into the first object detection model for object detection to obtain a first output result, and inputting the test data into the second object detection model for object detection to obtain a second output result;
calculating a first difference value of the first output result relative to label information, and calculating a second difference value of the second output result relative to the label information, where the label information is information for pre-labelling the test data; and
obtaining a determining result, by determining, based on the first difference value and the second difference value, whether the accuracy of the second object detection model for object detection is higher than the accuracy of the first object detection model for object detection, as the test result;
where the target attribute is obtained by:
   obtaining frequency of occurrence of candidate attributes, where the candidate attribute is attribute information of an object whose confidence level is lower than a preset confidence threshold in results obtained by detecting the objects in the multimedia data through the first object detection model; and
   determining a candidate attribute whose frequency of occurrence reaches a preset frequency condition as the target attribute.

**In** an embodiment of the present disclosure, the new test data includes at least one of:
data with label information input by a user via a client; or
**data** obtained by labelling candidate data by the user, where the candidate data is data extracted from the multimedia data collected by the data collection device.

**In** an embodiment of the present disclosure, the method further includes:
**in** response to determining to update the first object detection model in the data collection device to the second object detection model, quantifying the second object detection model in accordance with a preset quantification method to obtain a quantified second object detection model;
verifying consistency of the quantified second object detection model and the second object detection model before quantization by using preset verification data; and
**in** response to determining that a verification result indicates that the quantified second object detection model is consistent with the second object detection model before quantization, converting a format of the quantified second object detection model to a format supported by the data collection device to obtain a format-converted second object detection model, and updating the first object detection model in the data collection device to the format-converted second object detection model.

**In** an embodiment of the present disclosure, the method further includes:
**in** response to determining to update the first object detection model in the data collection device to the second object detection model, updating the first object detection model in the same class of data collection devices to the second object detection model, where the same class of data collection devices are data collection devices using the first object detection model.

In an embodiment of the present disclosure, training the first object detection model by using the first sample data to obtain the second object detection model includes:
training the first object detection model by using the first sample data and second sample data to obtain the second object detection model, where the second sample data is multimedia data input by a user via a client.

According to a second aspect. An embodiment of the present disclosure provides a self-training system, the system includes a self-training server and a data collection device.

**The** data collection device is configured to collect multimedia data, and send, based on attribute information obtained by detecting objects in the multimedia data through a first object detection model, the multimedia data and the attribute information of the objects in the multimedia data to the self-training server, where the first object detection model is a model currently used by the data collection device.

The self-training server is configured to receive the multimedia data sent by the data collection device and the attribute information of the objects in the multimedia data, select, based on the attribute information of the objects in the multimedia data, data containing an object with a target attribute from the multimedia data as first sample data, and train the first object detection model by using the first sample data to obtain a second object detection model, where the target attribute is an attribute of the object in the multimedia data whose accuracy of an detection result when the first object detection model detects the object in the multimedia data meets a preset self-training condition.

According to a third aspect, an embodiment of the present disclosure provides a self-training apparatus, the apparatus includes:
**a** data obtaining module, configured to obtain multimedia data collected by a data collection device, and obtain attribute information by detecting objects in the multimedia data through a first object detection model, where the first object detection model is a model currently used by the data collection device;
a data selecting module, configured to select, based on the attribute information of the objects in the multimedia data, data containing an object with a target attribute from the multimedia data as first sample data, where the target attribute is an attribute of the object in the multimedia data whose accuracy of a detection result obtained when the first object detection model detects the object in the multimedia data meets a preset self-training condition; and
a model training module, configured to train the first object detection model by using the first sample data to obtain a second object detection model,
where the self-training apparatus further includes: an accuracy testing module, configured to test, based on test data, accuracy of the second object detection model for object detection to obtain a test result, where the test data includes at least one of existing test data or new test data, the existing test data is data already used for testing accuracy of the first object detection model for object detection, and the new test data is unused test data; and a result determination module, configured to determine, based on the test result, whether to update the first object detection model in the data collection device to the second object detection model.
where the accuracy testing module is specifically configured to:
input the test data into the first object detection model for object detection to obtain a first output result, and input the test data into the second object detection model for object detection to obtain a second output result;
calculate a first difference value of the first output result relative to the label information, and calculate a second difference value of the second output result relative to the label information, wherein the label information is information for pre-labelling the test data; and
obtain a determining result, by determining, based on the first difference value and the second difference value, whether the accuracy of the second object detection model for the object detection is higher than the accuracy of the first object detection model for object detection, as the test result;
where the apparatus further includes a target attribute determination module, specifically configured to obtain the target attribute by:
   obtaining frequency of occurrence of candidate attributes, where the candidate attribute is attribute information of an object whose confidence level is lower than a preset confidence threshold in results obtained by detecting the objects in the multimedia data through the first object detection model; and
   determine a candidate attribute whose frequency of occurrence reaches a preset frequency condition as the target attribute.

**In** an embodiment of the present disclosure, the new test data includes at least one of:
data with label information input by a user via a client; or
data obtained by labelling candidate data by the user, where the candidate data is data extracted from the multimedia data collected by the data collection device.

In an embodiment of the present disclosure, the apparatus further includes a first model update module, specifically configured to:
in response to determining to update the first object detection model in the data collection device to the second object detection model, quantify the second object detection model in accordance with a preset quantification method to obtain a quantified second object detection model;
verify consistency of the quantified second object detection model and the second object detection model before quantization by using preset verification data; and
in response to determining that a verification result indicates that the quantified second object detection model is consistent with the second object detection model before quantization, convert a format of the quantified second object detection model to a format supported by the data collection device to obtain a format-converted second object detection model, and update the first object detection model in the data collection device to the format-converted second object detection model.

**In** an embodiment of the present disclosure, the apparatus further includes a second model update module, specifically configured to:
in response to determining to update the first object detection model in the data collection device to the second object detection model, update the first object detection model in the same class of data collection devices to the second object detection model, where the same class of data collection devices are data collection devices using the first object detection model.

**In** an embodiment of the present disclosure, the model training module is specifically configured to:
train the first object detection model by using the first sample data and second sample data to obtain the second object detection model, where the second sample data is multimedia data input by a user via a client.

According to a fourth aspect, an embodiment of the present disclosure provides an electronic device, including a processor, a communication interface, a memory, and a communication bus, where the processor, the communication interface, and the memory complete communication with each other via the communication bus,
the memory is configured to store computer programs, and
the processor is configured to perform the method according to the first aspect when executing the computer programs stored on the memory.

According to a fifth aspect, an embodiment of the present disclosure provides a computer-readable storage medium storing computer programs, where the computer programs are executed by a processor to perform the method according to the first aspect.

An embodiment of the present disclosure provides a computer program product including instructions that, when running on a computer, causes the computer to execute the method according to the first aspect.

The embodiments of the present disclosure can at least achieve the following beneficial effects.

When the self-training solution provided by embodiments of the present disclosure is implemented to train an object detection model, multimedia data collected by a data collection device is obtained, and attribute information is obtained by detecting objects in the multimedia data through a first object detection model, where the first object detection model is a model currently used by the data collection device; based on the attribute information of the objects in the multimedia data, data containing an object with a target attribute is selected from the multimedia data as first sample data, where the target attribute is an attribute of the object in the multimedia data whose accuracy of a detection result obtained when the first object detection model detects the object in the multimedia data meets a preset self-training condition; and the first object detection model is trained by using the first sample data to obtain a second object detection model. The first object detection model can be trained according to the multimedia data collected by the data collection device during the application of the first object detection model. Since the objects in the first sample data have the target attribute, and the target attribute can be understood as attributes of the objects in the multimedia data with low accuracy of the detection results obtained when the first object detection model detects the objects in the multimedia data, in other words, the first object detection model has low accuracy for object detection on the multimedia data with the target attribute. Therefore, by training the first object detection model with the first sample data, the accuracy of the first object detection model for object detection on the multimedia data with the target attribute can be improved. It follows that applying the solution provided by the embodiment of the present disclosure can improve the accuracy of the object detection model for object detection. Accordingly, the application of the solution provided by the embodiments of the present disclosure can improve the accuracy of the object detection model for object detection.

### BRIEF DESCRIPTION OF THE DRAWINGS

To describe the technical solutions of the embodiments of the present disclosure or the related art more clearly, the following briefly introduces the accompanying drawings required for describing the embodiments or the related art. Apparently, the accompanying drawings in the following description show only some embodiments of the present disclosure, and a person of ordinary skill in the art may still derive other drawings from these accompanying drawings without inventive efforts.
FIG. 1 is a flowchart illustrating a self-training method according to an embodiment of the present disclosure.
FIG. 2 is a flowchart illustrating a self-training method according to another embodiment of the present disclosure.
FIG. 3 is a flowchart illustrating a method for determining model update according to an embodiment of the present disclosure.
FIG. 4 is a flowchart illustrating a method for testing a model according to an embodiment of the present disclosure.
FIG. 5 is a schematic diagram illustrating a start process of a self-training according to an embodiment of the present disclosure.
FIG. 6 is a schematic diagram illustrating a process of querying self-training condition according to an embodiment of the present disclosure.
FIG. 7 is a schematic structural diagram illustrating a first self-training system according to an embodiment of the present disclosure.
**FIG.** 8 is a schematic diagram illustrating a first self-training process according to an embodiment of the present disclosure.
FIG. 9 is a schematic structural diagram illustrating a second self-training system according to an embodiment of the present disclosure.
FIG. 10 is a schematic structural diagram illustrating a client and a data collection device according to an embodiment of the present disclosure.
FIG. 11 is a schematic diagram illustrating a second self-training process according to an embodiment of the present disclosure.
FIG. 12 is a schematic structural diagram illustrating a third self-training system according to an embodiment of the present disclosure.
FIG. 13 is a schematic structural diagram illustrating a self-training apparatus according to embodiment of the present disclosure.
FIG. 14 is a schematic structural diagram illustrating an electronic device according to an embodiment of the present disclosure.

### DETAILED DESCRIPTION OF THE EMBODIMENTS

The following clearly and completely describes the technical solutions in the embodiments of the present disclosure with reference to the accompanying drawings in the embodiments of the present disclosure. Apparently, the described embodiments are some of the embodiments of the present disclosure rather than all of the embodiments. All other embodiments obtained by a person of ordinary skill in the art based on the embodiments of the present disclosure without creative efforts shall fall within the protection scope of the present disclosure.

To improve the accuracy of the object detection model for object detection, embodiments of the present disclosure aim to provide a self-training method, a self-training system, a self-training apparatus, an electronic device and a storage medium, which are described in detail below.

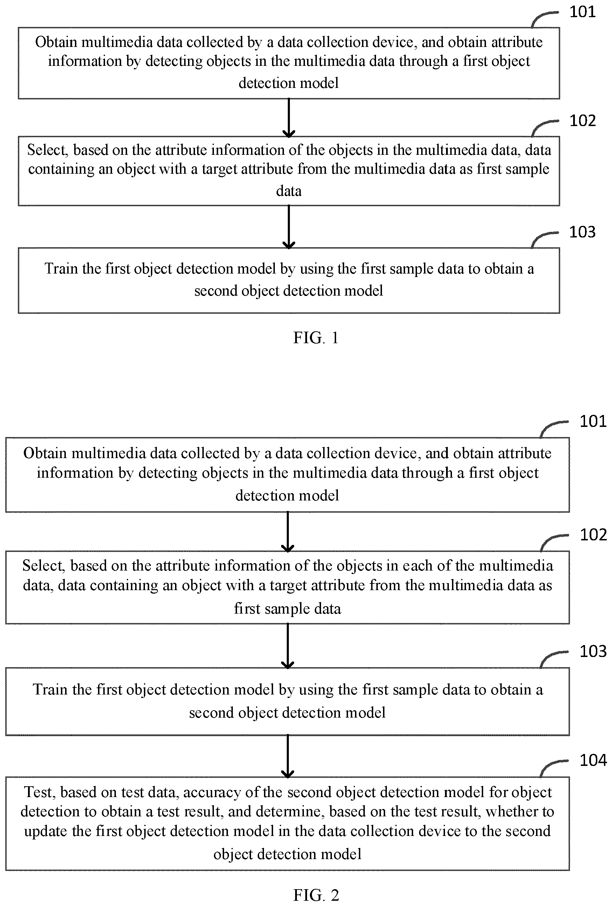

Referring to FIG. 1, FIG. 1 is a flowchart illustrating a self-training method according to an embodiment of the present disclosure. The method is applied to an electronic device, which is a data collection device with object detection function. An object detection model is configured in the data collection device, and the objects in the collected multimedia data are detected directly by using the object detection model. The data collection device may be a device for collecting multimedia data. Specifically, the data collection device may be a device for collecting images, such as an IP camera (IPC, i.e., network camera), or a mobile phone and a tablet PC with image collection function. The data collection device may be a device for collecting audio, such as an audio monitor, or a mobile phone and a tablet PC with audio collection function. The data collection device may also be a storage device that indirectly obtains multimedia data, such as a network video recorder (NVR), a digital video recorder (DVR), etc. Specifically, the camera, the audio monitor and other devices can send the collected multimedia data to the storage device, and the storage device can obtain the multimedia data. The electronic device may also be a server, etc.

The self-training method includes steps 101 to 103 as follows.

**At** step 101, multimedia data collected by a data collection device is obtained, and attribute information is obtained by detecting objects in the multimedia data through a first object detection model.

The first object detection model is a model currently used by the data collection device.

The multimedia data may be images, video, audio, etc. When the multimedia data is the video or the images, the first object detection model may be a model for detecting objects in the video or image, e.g., when the object is a vehicle, the first object detection model may be a vehicle detection model, a vehicle classification model, etc.; when the object is a human face, the first object detection model may be a face recognition model. When the multimedia data is the audio, the first object detection model may be a model for detecting objects in the audio, e.g., when the object is a piece of voice, the first object detection model may be a voice recognition model, etc.

The objects are objects to be detected by the first object detection model, and the attribute information is information describing the attributes possessed by the objects in the multimedia data. For example, when the first detection model is a face recognition model, the objects are faces in the images, and attribute information of a face may include: a position of the face in the image, whether the face is wearing accessories, such as a mask, a hat, glasses. When the first object detection model is a vehicle detection model, the objects is vehicles, and attribute information of a vehicle may include: a position of the vehicle in the image, a color of the vehicle, a size of the vehicle, etc.

Specifically, the data collection device may collect the multimedia data, and the electronic device may obtain the multimedia data, and then detect the objects in the multimedia data by using the first object detection model. When the objects in the multimedia data are detected by using the first object detection model, process information at the time of detection and detection result information can be obtained, and information for describing attributes possessed by the objects in the multimedia data can be selected from the process information and the detection result information as attribute information.

**In** an embodiment of the present disclosure, the entire multimedia data collected by the data collection device can be obtained, or the multimedia data can be extracted from the data collected by the data collection device, specifically the multimedia data can be extracted according to a preset time interval, or the multimedia data can be randomly extracted, which is not limited by embodiments of the present disclosure.

At step 102, based on the attribute information of the objects in the multimedia data, data containing an object with a target attribute is selected from the multimedia data as first sample data.

The target attribute is an attribute of the object in the multimedia data whose accuracy of a detection result obtained when the first object detection model detects the objects in the multimedia data meets a preset self-training condition. The target attribute may be understood as the attribute possessed by the object in the multimedia data whose accuracy of the detection result detected by the first object detection model is lower, that is, when the first object detection model performs object detection on the multimedia data containing the object with the target attribute, accuracy of the obtained detection result is lower. For example, if the vehicle detection model performs object detection with lower accuracy for an image in which a vehicle is located in the upper right corner of the image, the target attribute may be that the vehicle is located in the upper right corner of the image. The target attribute may be an attribute of an object predetermined by a user.

The self-training condition may be that the accuracy of the detection result is lower than a preset accuracy threshold, or the frequency of occurrence of the attributes possessed by the objects in the multimedia data whose accuracy of the detection result is lower than the accuracy threshold reaches a preset frequency threshold, or a ratio of the frequency of occurrence of the attributes possessed by the objects in the multimedia data whose accuracy of the detection result is lower than the accuracy threshold to the frequency of occurrence of the attributes possessed by the objects in all the multimedia data reaches a preset ratio threshold.

**The** accuracy of the detection result may be a confidence level of a detection result outputted by the first object detection model, or an accuracy of a detection result calculated by using a preset evaluation algorithm, or the detection result may be scored by a user, and the accuracy of the detection result may be obtained based on the score.

**Specifically,** the attributes possessed by the objects in the multimedia data whose accuracy of the detection results meets the self-training condition may be counted in advance when the first object detection model detects the objects in the multimedia data, and the target attribute is determined based on the statistics. Upon selecting the first sample data, since the attribute information possessed by the objects contained in the multimedia data is obtained in step 101, the data containing the objects with the target attribute is selected from the multimedia data as the first sample data.

For example, the target attribute is that a color of a vehicle is white, and if attribute information possessed by a vehicle in an obtained image includes that the color is white, the image can be used as the first sample data.

**In** an embodiment of the present disclosure, the attribute information may further include an object score, which is used to indicate: the probability that the content contained in the multimedia data is the object. For example, for a face image, the object score indicates: the probability that the content contained in the image is a human face. Thus, when selecting the first sample data, the multimedia data that contains an object with the target attribute and whose object score reaches a preset scoring threshold can be selected as the first sample data.

At step 103, the first object detection model is trained by using the first sample data to obtain a second object detection model.

In an embodiment of the present disclosure, since the selected first sample data does not include label information, the first object detection model can be unsupervisedly trained by using the first sample data to obtain the second object detection model.

In an embodiment of the present disclosure, the first object detection model can be trained by using the first sample data and the second sample data to obtain the second object detection model.

The second sample data may be multimedia data input by a user via a client. The second sample data may be data obtained from a multimedia database, or data collected by other data collection devices. The second sample data may be data containing objects with the target attribute, or data containing objects with other attributes.

The client can be a cell phone, an electronic computer, a tablet computer, etc., and the user can achieve data interaction and instruction interaction with the electronic device through the client.

Specifically, the multimedia data input by the user via the client may be data including label information or data without label information. When the second sample data is data including the label information, the first sample data can be used for unsupervised training of the first object detection model and the second sample data can be used for supervised training of the first object detection model to finally obtain the second object detection model. When the second sample data is data without the label information, the first sample data and the second sample data can be used for unsupervised training of the first object detection model to obtain the second object detection model.

Since the second sample data is data input by the user via the client, the user can select more targeted multimedia data for training the first object detection model when inputting the second sample data via the client, thereby the accuracy of the second object detection model after training is further improved.

In an embodiment of the present disclosure, when a plurality of object detection models are stored in the electronic device, a first object detection model needs to be selected from the plurality of object detection models, and the first object detection model is trained by using the first sample data. The first object detection model may also be selected based on the attribute information of the objects in the first sample data. For example, when the attribute information of the object in the first sample data indicates that the first sample data is vehicle images, a vehicle detection model may be selected as the first object detection model, and when the attribute information of the object in the first sample data indicates that the first sample data is face images, a face recognition model may be selected as the first object detection model.

When training the object detection model by the self-training solution provided by the embodiments of the present disclosure, firstly, the multimedia data collected by the data collection device is obtained, and the attribute information is obtained by detecting objects in the multimedia data through the first object detection model. The first object detection model is a model currently used by the data collection device. Based on the attribute information of the objects in the multimedia data, data containing an object with the target attribute is selected from the multimedia data as the first sample data, where the target attribute is an attribute of the object in the multimedia data whose accuracy of a detection result obtained when the first object detection model detects the objects in the multimedia data meets a preset self-training condition. The first object detection model is trained by using the first sample data to obtain the second object detection model. In this way, during using the first object detection model, the first object detection model may be trained based on the multimedia data collected by the data collection device. Since the objects in the first sample data have the target attribute, and the target attribute can be understood as an attribute of the object in the multimedia data whose accuracy of a detection result is low when the first object detection model detects the objects in the multimedia data, it also means that the first object detection model has low accuracy of object detection for the multimedia data with the target attribute, so that the first object detection model can be trained by using the first sample data to improve the accuracy of the first object detection model for object detection of the multimedia data with the target attribute. Thus, the accuracy of object detection performed by the object detection model can be improved by applying the solution provided by the embodiments of the present disclosure.

In addition, in the solution provided by the embodiments of the present disclosure, the first sample data is selected from the multimedia data collected by the image collection device, and the first sample data is used to train the first object detection model, which eliminates the need to collect sample data from various multimedia data platforms, thereby reducing the difficulty of obtaining sample data. The selected first sample data is data containing objects with the target attribute, and the selection of the first sample data is not subjectively influenced by an operator, thereby the accuracy of the selected first sample data is improved, and thus the accuracy of the object detection model obtained by training is improved. Moreover, when the model is trained based on the selected first sample data, the first sample data does not need to be labeled, such that the workload of labeling the sample data is reduced and the efficiency of training the model is improved.

In an embodiment of the present disclosure, upon obtaining the target attribute, frequency of occurrence of candidate attributes may be obtained, and a candidate attribute whose frequency of occurrence reaches a preset frequency condition is determined as the target attribute.

The candidate attribute is attribute information of an object whose confidence level is lower than a preset confidence threshold in results obtained by detecting the objects in the multimedia data through the first object detection model. The candidate attribute can be understood as the attribute information of the object in the data of the multimedia data whose confidence level of the object detection result obtained by the first object detection model is lower than the preset confidence threshold.

The frequency condition may be that the frequency of occurrence reaches a preset frequency threshold, e.g., the frequency threshold may be 100 times, 500 times, 1000 times, etc. The frequency condition may also be that a ratio of the frequency of occurrence of a candidate attribute to the total frequency of occurrence of all candidate attributes reaches a preset ratio threshold. For example, the object is a vehicle, the candidate attributes include a black vehicle, a gray vehicle and a green vehicle, and the ratio threshold is 60%, where the frequency of occurrence of black vehicle is 30 times, the frequency of occurrence of gray vehicle is 80 times, and the frequency of occurrence of green vehicle is 20 times, thus, the ratio of the frequency of occurrence of gray vehicle to the total frequency of occurrence is 61%, which reaches the ratio threshold, so it can be considered that the frequency of occurrence of gray vehicle reaches the preset frequency condition, and the gray vehicle can be used as the target attribute.

Specifically, the first object detection model, when used to detect the objects in the input multimedia data, can obtain a detection result, and confidence level of the detection result. Attributes possessed by the objects in the multimedia data whose confidence level of the detection result is lower than the confidence threshold can be recorded as candidate attributes, and when the frequency of occurrence of a recorded candidate attribute reaches a preset frequency condition, the candidate attribute can be used as the target attribute.

Referring to FIG. 2, in an embodiment of the present disclosure, after the second object detection model is obtained by training in step 103, the following step 104 is also included.

At step 104, based on test data, accuracy of the second object detection model for object detection is tested to obtain a test result, and based on the test result, whether to update the first object detection model in the data collection device to the second object detection model is determined.

The test result indicates the accuracy for object detection performed by the second object detection model. The test data includes at least one of existing test data or new test data. The existing test data is data that has been used to test the accuracy for object detection performed by the first object detection model. The existing test data may be pre-stored multimedia data.

**In** an embodiment of the present disclosure, the existing test data may include label information, which facilitates testing of the second object detection model by using the existing test data. The existing test data may also not include label information, which is limited by the embodiments of the present disclosure.

The new test data is unused test data, in other words, the new test data is data that has not been previously tested for the accuracy of the first object detection model. The new test data may be unused data from pre-obtained data, or data obtained after obtaining a first test result indicating the accuracy of the second object detection model for object detection over the accuracy of the first object detection model for object detection.

The new test data may include label information or may not include label information, which is limited by the embodiments of the present disclosure.

In the embodiments, the accuracy for object detection performed by the second object detection model may be tested, and based on the detected accuracy, whether to update the first object detection model in the data collection device to the second object detection model is determined.

Specifically, for the second object detection model obtained by training, the accuracy for object detection performed by the second object detection model can be tested based on the test data. In the case of higher accuracy, the first object detection model in the data collection device can be updated to the second object detection model. In the case of lower accuracy, the first object detection model in the data collection device can be not update, or the second object detection model can continue to be trained until the accuracy of the second object detection model for object detection is higher than the accuracy of the first object detection model for object detection.

**In** an embodiment of the present disclosure, to obtain a test result, the test data can be input into the first object detection model for object detection to obtain a first output result, and the test data can be input into the second object detection model for object detection to obtain a second output result, a first difference value of the first output result relative to the label information is calculated, and a second difference value of the second output result relative to the label information value is calculated. Whether the accuracy of the second object detection model for object detection is higher than the accuracy of the first object detection model for object detection is determined based on the first difference value and the second difference value, so as to obtain a determining result as the test result.

The label information is information for pre-labelling the test data.

The first difference value and the second difference value can be obtained by calculating an Euclidean distance, a cosine similarity, a Manhattan distance, etc. For example, the cosine similarity of the first output result relative to the label information can be calculated as the first difference value.

Specifically, when the first difference value is greater than the second difference value, it indicates that a first output result obtained by detecting the objects in the test data through the first object detection model is more different from the label information, and a second output result obtained by detecting the objects in the test data through the second object detection model is less different from the label information, that is, the accuracy of the first object detection model for object detection is low, and the accuracy of the second object detection model for object detection is high. Therefore, it can be determined that the accuracy of the second object detection model for object detection is higher than the accuracy of the first object detection model for object detection.

When the first difference value is smaller than the second difference value, it indicate that a first output result obtained by detecting the objects in the test data through the first object detection model is less different from the label information, and a second output result obtained by detecting the objects in the test data through the second object detection model is more different from the label information, that is, the accuracy of the first object detection model for object detection is high, and the accuracy of the second object detection model for object detection is low. Therefore, it can be determined that the accuracy of the first object detection model for object detection is higher than the accuracy of the second object detection model for object detection.

The determining result is used as a test result, therefore, whether to update the first object detection model in the data collection device to the second object detection model can be determined based on the test result.

**In** an embodiment of the present disclosure, the test data may be only input into the second object detection model to obtain a third output result, and a third difference value of the third output result relative to the label information is calculated. When the third difference value is less than a preset difference threshold, the second object detection model is considered to have a higher accuracy for object detection. When the third difference value is not less than the preset difference threshold, the second object detection model is considered to have a lower accuracy for object detection.

The preset difference threshold may be set manually based on experience, or may be obtained by calculating a mean value of the difference value of the test result obtained from the detection of objects in the test data by the first object detection model relative to the label information, the mean value may be an arithmetic mean, a weighted mean, etc.

**In** an embodiment of the present disclosure, the new test data may be data with label information input by the user via the client. Specifically, the data can be obtained from a multimedia database, or the data can be collected by other data collection devices, etc. After the multimedia data is obtained, the multimedia data can be labeled by the user, and the labeled multimedia data can be input into the electronic device through the client to obtain the new test data.

The new test data may also be data obtained by the user by labeling candidate data, where the candidate data is data extracted from the multimedia data collected by the data collection device. Specifically, after the electronic device obtains the multimedia data collected by the data collection device in step 101, some data can be extracted from the multimedia data and sent to the client. The user labels the data through the client, and the client then returns the labeled data to the electronic device to obtain the new test data.

When the candidate data is extracted from the multimedia data, the data can be extracted randomly or according to a preset data collection interval, for example, when the multimedia data is images, an image can be extracted at an interval of 60 frames as the candidate data. Alternatively, data meeting a preset attribute is extracted according to the attribute information of the objects contained in the multimedia data as the candidate data. The extracted data can be data used for training a model or data other than the data for training a model.

In an embodiment of the present disclosure, a part of the data can also be extracted from the first sample data, and the extracted data is labeled by the user, and the labeled data is used as the new test data. It can be understood that based on the obtained attribute information of the objects in the multimedia data, the data containing the object with the target attribute is selected from the multimedia data. The selected data is divided into two parts, one part of the data is used as sample data for training the first object detection model, and the other part of the data after labeling is used as test data for testing the second object detection model obtained after training.

**In** an embodiment of the present disclosure, when the test data does not include label information, the test data can be input into the second object detection model to obtain a confidence level of the detection result output by the second object detection model, and the confidence level is used as the accuracy of the second object detection model for object detection to obtain the test result.

**In** an embodiment of the present disclosure, the second object detection model can also be scored based on the accuracy of the second object detection model obtained by testing, and a scoring result can be displayed to the user via the client. Based on the scoring result, the user can send instructions via the client indicating whether to update the first object detection model in the data collection device to the second object detection model.

**In** an embodiment of the present disclosure, in response to determining to update the first object detection model in the data collection device to the second object detection model, the second object detection model is quantified in accordance with a preset quantization method, and the consistency of the quantified second object detection model and the second object detection model before quantization is verified by using preset verification data. In response to determining that a verification result indicates that the quantified second object detection model is consistent with the second object detection model before quantization, a format of the quantified second object detection model is converted to a format supported by the data collection device to obtain a format-converted second object detection model, and the first object detection model in the data collection device is updated to the format-converted second object detection model.

The quantization method may be weight quantization, activation value quantization, etc. The quantization of the second object detection model can make the second object detection model more streamlined, such that the memory can be saved when running the second object detection model and the efficiency of the model operation can be improved.

Specifically, for the quantized second object detection model, the consistency of the quantized second object detection model relative to the second object detection model before quantization can be verified by using the verification data. Specifically, the verification data can be input into the quantized second object detection model to obtain a first verification result, and the verification data can be input into the second object detection model before quantization to obtain a second verification result, and a difference value of the first verification result relative to the second verification result can be calculated, and the consistency of the quantized second object detection model relative to the second object detection model before quantization can be determined based on the difference value. When the difference value is less than a preset difference value threshold, it indicates that the detection result obtained by the quantized second object detection model for detecting the objects in the multimedia data are less different from the detection result obtained by the second object detection model before quantization for detecting the objects in the multimedia data, and thus the quantized second object detection model can be considered consistent relative to the second object detection model before quantization.

**In** an embodiment of the present disclosure, in response to determining that a verification result indicates that the quantified second object detection model is consistent with the second object detection model before quantization, the format of the quantified second object detection model may be converted.

Specifically, different data collection devices support different model formats, the format includes bit width, arrangement, and carry system of the data in the model. For example, processors in different data collection devices may be produced by different manufacturers, such as NVIDIA, Intel, AMD (Advanced Micro Devices), etc. Processors produced by different manufacturers support different model formats. The format of the model supported by the data collection device can be determined first, and then the quantized second object detection model can be converted according to the determined format, so that the format-converted second object detection model can be run in the data collection device, and the first object detection model in the data collection device can be easily updated to the format-converted second object detection model.

In an embodiment of the present disclosure, in response to determining to update the first object detection model in the data collection device to the second object detection model, the first object detection model in the same class of data collection devices may be updated to the second object detection model.

The same class of data collection devices are data collection devices using the first object detection model. For example, the first object detection model is a face recognition model, the same class of data collection devices are data collection devices that uses the face recognition model.

Specifically, since the first object detection model used in each of the same class of data collection devices is the same, in response to determining to update the first object detection model in the data collection devices to a second object detection model, the accuracy of the second object detection model for object detection is higher than the accuracy of the first object detection model, that is, the accuracy of the second object detection model is higher than the accuracy of the first object detection model used in each of the same class of data collection devices, and thus the first object detection model in each of the same class of data collection devices can be updated to the second object detection model.

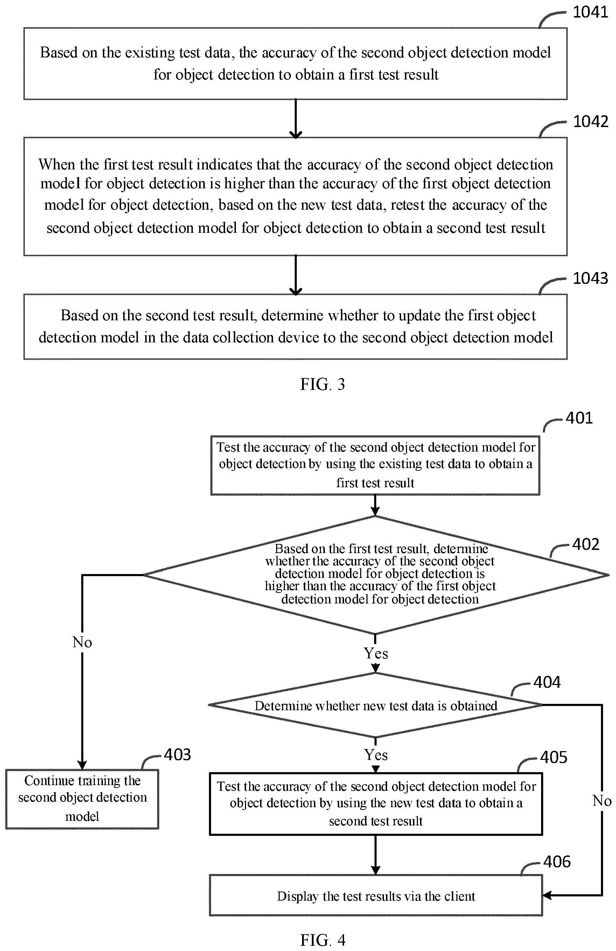

Referring to FIG. 3, according to an embodiment of the present disclosure, in step 104, determining whether to update the first object detection model in the data collection device includes the following steps 1041 to 1043.

At step 1041, based on the existing test data, the accuracy of the second object detection model for object detection is tested to obtain a first test result.

The existing test data carries the label information.

In an embodiment of the present disclosure, the existing test data can be input into the first object detection model for object detection to obtain the first output result, and the existing test data can be input into the second object detection model for object detection to obtain the second output result, the first difference value of the first output result relative to the label information is calculated, and the second difference value of the second output result relative to the label information is calculated, and based on the first difference value and the second difference value, whether the accuracy of the second object detection model for object detection is higher than the accuracy of the first object detection model for object detection is determined, and a determining result is determined as the first test result.

When the first difference value is greater than the second difference value, it indicates that a first output result obtained by detecting the objects in the existing test data through the first object detection model is more different from the label information, and a second output result obtained by detecting the objects in the test data through the second object detection model is less different from the label information, that is, the accuracy of the first object detection model for object detection is low, and the accuracy of the second object detection model for object detection is high.

**When** the first difference value is smaller than the second difference value, it indicate that a first output result obtained by detecting the objects in the existing test data through the first object detection model is less different from the label information, and a second output result obtained by detecting the objects in the test data through the second object detection model is more different from the label information, that is, the accuracy of the first object detection model for object detection is high, and the accuracy of the second object detection model for object detection is low.

In an embodiment of the present disclosure, the existing test data may be only input into the second object detection model to obtain a third output result, and a third difference value of the third output result relative to the label information is calculated. When the third difference value is less than a preset difference threshold, the second object detection model is considered to have a higher accuracy for object detection. When the third difference value is not less than the preset difference threshold, the second object detection model is considered to have a lower accuracy for object detection. The preset difference threshold may be set manually based on experience, or may be obtained by calculating a mean value of the difference value of the test result obtained from the detection of objects in the existing test data by the first object detection model relative to the label information, the mean value may be an arithmetic mean, a weighted mean, etc.

At step 1042, when the first test result indicates that the accuracy of the second object detection model for object detection is higher than the accuracy of the first object detection model for object detection, based on the new test data, the accuracy of the second object detection model for object detection is retested to obtain a second test result.

Specifically, after the first test result that indicates the accuracy of the second object detection model for object detection is higher than the accuracy of the first object detection model for object detection is obtained based on the existing test data, the second object detection model can be tested again by using the new test data to obtain the second test result. Where the testing is similar to step 1041 and will not be repeated herein.

**At** step 1043, based on the second test result, whether to update the first object detection model in the data collection device to the second object detection model is determined.

Specifically, when the second test result indicates that the accuracy of the second object detection model for object detection is higher than the accuracy of the first object detection model for object detection, the first object detection model in the data collection device is determined to be updated to the second object detection model, otherwise, the first object detection model in the data collection device is not updated.

The second test result can be displayed to the user. The user determines whether to update the first object detection model in the data collection device to the second object detection model. When an update instruction sent by the user through the client is received, the first object detection model in the data collection device is updated to the second object detection model.

In this way, firstly, based on the existing test data, the accuracy of the second object detection model for object detection is tested. When the first test result indicates the accuracy of the second object detection model is high, further, based on the new test data, the accuracy of the second object detection model is tested. According to the second test result, whether to update the first object detection model in the data collection device to the second object detection model is determined, such that the test results is more accurate.

In an embodiment of the present disclosure, when the new test data sent by the user through the client is not obtained, whether to update the first object detection model in the data collection device to the second object detection model can be directly determined based on the first test result.

Referring to FIG. 4, FIG. 4 is a flowchart illustrating a method for testing a model according to an embodiment of the present disclosure, the method includes steps 401 to 406 as follows.

At step 401, the accuracy of the second object detection model for object detection is tested by using the existing test data to obtain a first test result.

At step 402, based on the first test result, whether the accuracy of the second object detection model for object detection is higher than the accuracy of the first object detection model for object detection is determined, and if no, step 403 is performed, and if yes, step 404 is performed.

**At** step 403, the second object detection model is continued to be trained.

**At** step 404, whether new test data is obtained is determined, and if yes, step 405 is performed, and if no, step 406 is performed.

**At** step 405, the accuracy of the second object detection model for object detection is tested by using the new test data to obtain a second test result.

At step 406, the test results are displayed via the client.

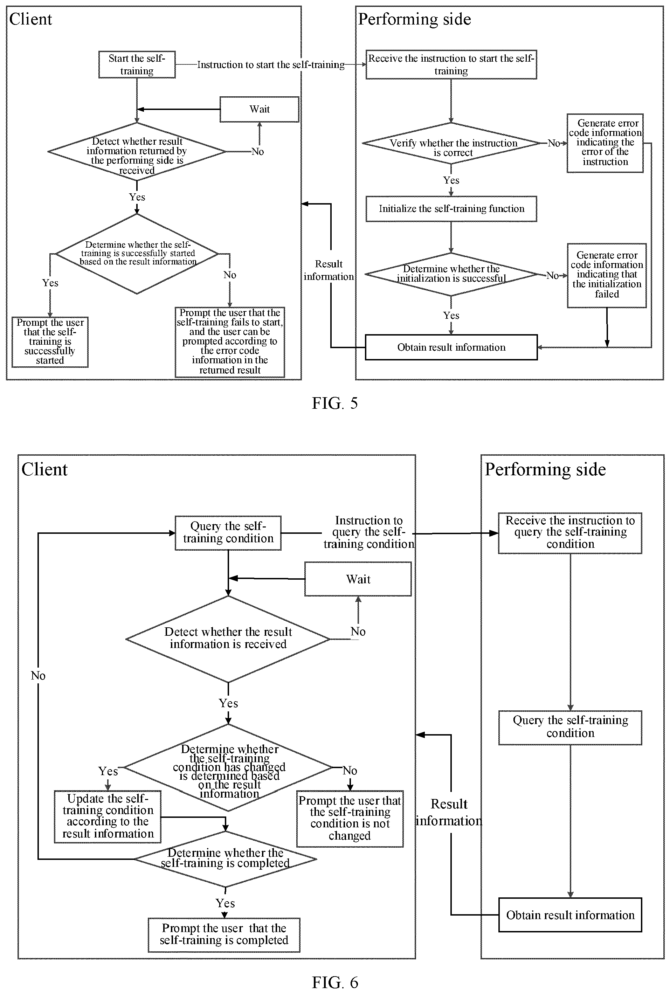

Referring to FIG. 5, FIG. 5 is a schematic diagram illustrating a start process of a self-training according to an embodiment of the present disclosure. The client may display a graphical user interface (GUI) to a user, the user determines to start self-training by operating in the GUI interface, and the client obtains an instruction to start self-training through the GUI and then sends the instruction to the electronic device. The electronic device can contain an application program to execute self-training. After receiving the instruction to start self-training, firstly, whether the instruction is correct is verified, and if the instruction is incorrect, error code information indicating the error of the instruction is generated, and the error code information is returned to the client as the result information. If the instruction is correct, the self-training function is initialized and whether the initialization is successful is determined, and if no, the error code information indicating that the initialization failed is generated, and the error code information is returned to the client as the result information, and if yes, the information indicating that the initialization is successful is returned to the client as the result information. The client, after sending the instruction for starting self-training to the electronic device, detects whether the result information returned by the electronic device is received, and if no, the client will wait to receive the result information, and if yes, whether the self-training is successfully started is determined according to the result information. If the self-training is not started, the user can be prompted that the self-training fails to start, and the user can be prompted according to the error code information in the returned result. Specifically, the user can be prompted in the form of pop-up window. If the self-training is successfully started, the user can be prompted that the self-training is successfully started.

According to the solution provided by the embodiments of the present disclosure, the user can independently choose whether to start the self-training through the client, therefore, the freedom of starting the self-training is improved, and a better experience is brought to the user.

In an embodiment of the present disclosure, the electronic device, when detecting that the accuracy of the first object detection model used to detect the objects in the multimedia data containing the objects with a certain attribute is low, may start the self-training, and the attribute is used as the target attribute, so that the accuracy of the first object detection model to detect the objects in the multimedia data containing the objects with any attribute is improved, and the degree of automation of self-training is improved.

Referring to FIG. 6, FIG. 6 is a schematic diagram illustrating a process of querying self-training condition according to an embodiment of the present disclosure. The user can query the self-training condition by operating the GUI provided by the client, and the client, after receiving the instruction to query the self-training condition, can send the instruction to the electronic device to query the self-training condition, and the electronic device receives the instruction and queries the self-training condition, and returns the queried self-training condition as the result information to the client. The client detects whether the result information is received, and if no, the client continues to wait for receiving the result information, and if yes, whether the self-training condition has changed is determined based on the result information. If the self-training condition does not change, the user is prompted that the self-training condition is not changed. If the self-training condition has changed, the self-training condition is updated according to the result information and whether the self-training is completed is determined, if yes, the user is prompted that the self-training is completed, and if no, returning to query the self-training condition.

The self-training method provided by embodiments of the present disclosure can be applied to a self-training system, in a case, when the self-training system includes a client, a self-training server and a data collection device, the self-training method can be applied to the self-training server of the self-training system, and the data collection device can be an IPC, an NVR, a DVR with analysis function, or a server with analysis function, etc. In another case, when the self-training system includes a client and a data collection device, the self-training method can also be applied to the data collection device, as detailed below, respectively.

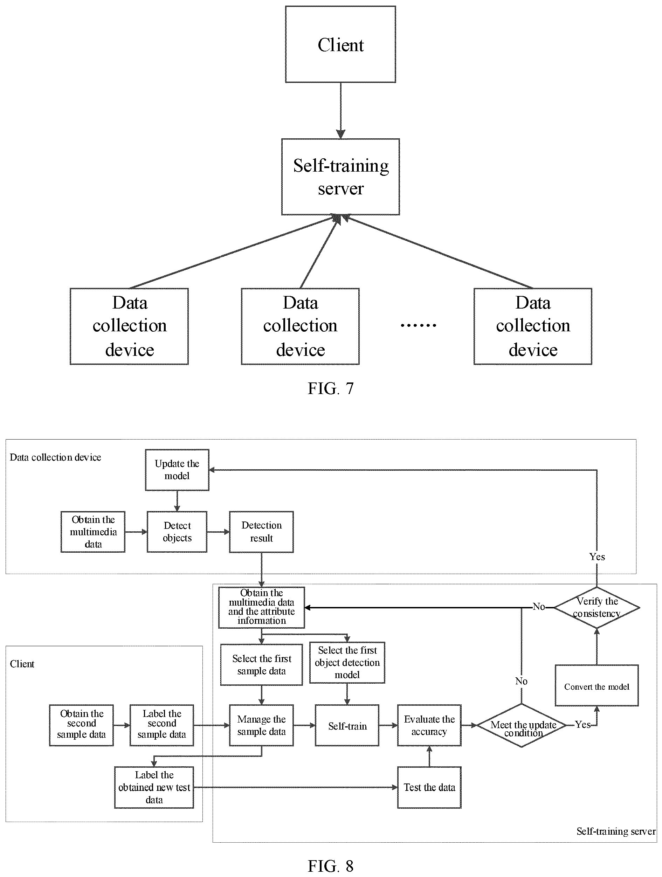

Referring to FIG. 7, FIG. 7 is a schematic structural diagram illustrating a first self-training system according to an embodiment of the present disclosure. As shown in FIG. 7, the self-training system may include a client, a self-training server, and a plurality of data collection devices, where the client and the self-training server may be connected to each other via a network, and the self-training server and each of the data collection devices may also be connected to each other via a network.

Referring to FIG. 8, FIG. 8 is a schematic diagram illustrating a first self-training process according to an embodiment of the present disclosure.

The data collection device may obtain the multimedia data and detect the objects in the multimedia data by the object detection model to obtain the attribute information of the objects in the multimedia data as a detection result.

The self-training server may obtain the multimedia data from the data collection device, and the attribute information of the objects in the multimedia data, and select data containing objects with the target attribute from the multimedia data as the first sample data for training the model. The self-training server may further select a corresponding first object detection model from the stored plurality of object detection models based on the attribute information of the multimedia data.

Where the self-training server, when obtaining the multimedia data and the attribute information, may obtain the multimedia data and the attribute information from a plurality of same class of data collection devices.

The client may also obtain the second sample data and label the second sample data, and send the labeled second sample data to the self-training server.

The self-training server can manage the first sample data and the second sample data, and use the first sample data and the second sample data to self-train the selected first object detection model to obtain the second object detection model. The accuracy of the second object detection model is then evaluated by using the test data.

The self-training server may select unlabeled data from the managed sample data to send to the client, and the user may label the data via the client to obtain new test data and send the new test data to the self-training server, such that the self-training server may evaluate the accuracy of the second object detection model by using the new test data.

If the accuracy of the second object detection model is evaluated to not meet the update condition, the self-training server may continue to obtain the multimedia data and the attribute information from the data collection device to continue training the model. If the accuracy of the second object detection model is evaluated to meet the update condition, the second object detection model may be converted, quantization and format conversion of the second object detection model are included, and the consistency of the converted second object detection model relative to the second object detection model before conversion is verified. If the verification result indicates that the converted second object detection model is not consistent with the second object detection model before conversion, the multimedia data and the attribute information can continue to be obtained from the data collection device to continue training the second object detection model. If the verification result indicates that the converted second object detection model is consistent with the second object detection model before conversion, the first object detection model in the data collection device can be updated to the second object detection model.

**In** addition, the self-training server can also store the second object detection model obtained by training to facilitate the subsequent self-training of the second object detection model.

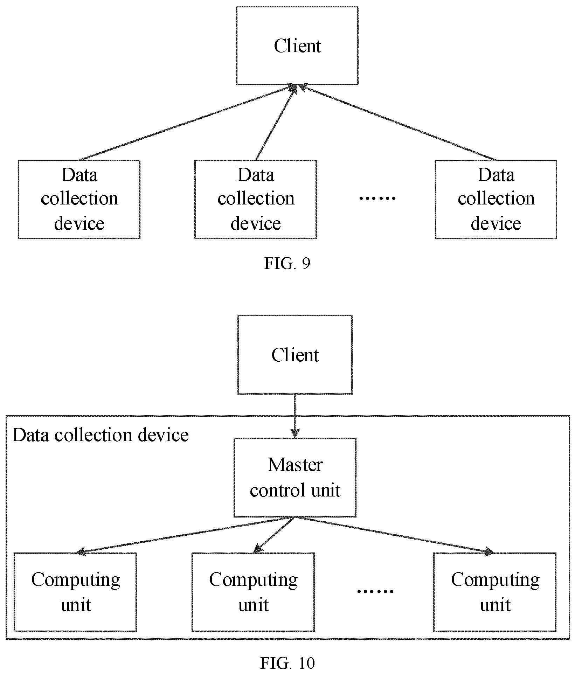

Referring to FIG. 9, FIG. 9 is a schematic structural diagram illustrating a second self-training system according to an embodiment of the present disclosure. As shown in FIG. 9, the self-training system may include a client and a plurality of data collection devices, where the client and the plurality of data collection devices may be connected to each other via a network.

Referring to FIG. 10, FIG. 10 is a schematic structural diagram illustrating a client and a data collection device according to an embodiment of the present disclosure. As shown in FIG. 10, the client is connected to the data collection device, and the data collection device contains a master control unit and a plurality of computing units, where the master control unit can be used to read data, call the computing units, etc., and each of the computing units can be used for running models, training models, etc. The data collection device may also include a storage unit for storing the object detection model deployed by the data collection device, the collected multimedia data, the trained object detection model, etc. The control unit is allowed to read sample data and the object detection models from the storage unit, train the read object detection models by using the read sample data, and store the trained object detection models to the storage unit. The client can control the master control unit in the data collection device to call the specified computing unit for training the model.

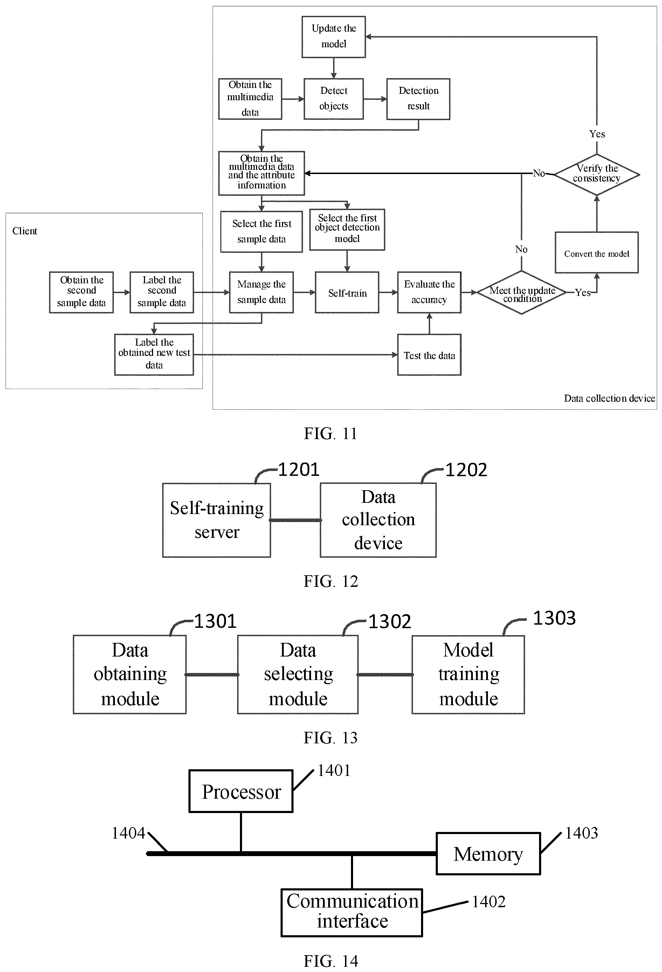

Referring to FIG. 11, FIG. 11 is a schematic diagram illustrating a second self-training process according to an embodiment of the present disclosure.

The data collection device may obtain the multimedia data and detect the objects in the multimedia data by the object detection model to obtain the attribute information of the objects in the multimedia data as a detection result. The multimedia data and the attribute information of the objects in the multimedia data are obtained from the detection result. Data containing objects with the target attribute is selected from the multimedia data as the first sample data for training the model. A corresponding first object detection model may also be selected from the stored plurality of object detection models based on the attribute information of the multimedia data.

When the multimedia data and the attribute information are obtained, the multimedia data and the attribute information may be obtained from a plurality of same class of data collection devices.

The client may also obtain the second sample data and label the second sample data, and send the labeled second sample data to the data collection device.

The data collection device can manage the first sample data and the second sample data, and use the first sample data and the second sample data to self-train the selected first object detection model to obtain the second object detection model. The accuracy of the second object detection model is then evaluated by using the test data.

The data collection device may select unlabeled data from the managed sample data to send to the client, and the user may label the data via the client to obtain new test data and send the new test data to the data collection device, such that the data collection device may evaluate the accuracy of the second object detection model by using the new test data.

**If the** accuracy of the second object detection model is evaluated to not meet the update condition, the data collection device may continue to obtain the multimedia data and the attribute information to continue training the model. If the accuracy of the second object detection model is evaluated to meet the update condition, the second object detection model may be converted, quantization and format conversion of the second object detection model are included, and the consistency of the converted second object detection model relative to the second object detection model before conversion is verified. If the verification result indicates that the converted second object detection model is not consistent with the second object detection model before conversion, the multimedia data and the attribute information can continue to be obtained to continue training the second object detection model. If the verification result indicates that the converted second object detection model is consistent with the second object detection model before conversion, the first object detection model in the data collection device can be updated to the second object detection model.

Referring to FIG. 12, FIG. 12 is a schematic structural diagram illustrating a third self-training system according to an embodiment of the present disclosure, the system includes a self-training server 1201 and a data collection device 1202.

The data collection device 1202 is configured to collect multimedia data, detect attribute information of objects in the multimedia data based on a first object detection model, and send the collected multimedia data and the attribute information of the objects in the multimedia data to the self-training server 1201, where the first object detection model is a model currently used by the data collection device 1202.

The self-training server 1201 is configured to receive the multimedia data sent by the data collection device 1202 and the attribute information of the objects in the multimedia data, select, based on the attribute information of the objects in the multimedia data, data containing an object with a target attribute from the multimedia data as first sample data, and train the first object detection model by using the first sample data to obtain a second object detection model, where the target attribute is an attribute of the object in the multimedia data whose accuracy of an detection result obtained when the first object detection model detects the objects in the multimedia data meets a preset self-training condition.

In an embodiment of the present disclosure, the self-training server 1201 is further configured to:
test, based on test data, accuracy of the second object detection model for object detection to obtain a test result, where the test data includes at least one of existing test data or new test data, the existing test data is data already used for testing accuracy of the first object detection model for object detection, and the new test data is unused test data; and
determine, based on the test result, whether to update the first object detection model in the data collection device 1202 to the second object detection model.

**In** an embodiment of the present disclosure, the new test data includes at least one of:
data with label information input by a user via a client; or
data obtained by labelling candidate data by the user, where the candidate data is data extracted from the multimedia data collected by the data collection device 1202.

In an embodiment of the present disclosure, the self-training server 1201 is specifically configured to:
input the test data into the first object detection model for object detection to obtain a first output result, and input the test data into the second object detection model for object detection to obtain a second output result;
calculate a first difference value of the first output result relative to label information, and calculate a second difference value of the second output result relative to the label information, where the label information is information for pre-labelling the test data; and
obtain a determining result, by determining, based on the first difference value and the second difference value, whether the accuracy of the second object detection model for object detection is higher than the accuracy of the first object detection model for object detection, as the test result.

In an embodiment of the present disclosure, the self-training server 1201 is further configured to:
in response to determining to update the first object detection model in the data collection device 1202 to the second object detection model, quantify the second object detection model in accordance with a preset quantification method to obtain a quantified second object detection model;
verify consistency of the quantified second object detection model and the second object detection model before quantization by using preset verification data; and
**in** response to determining that a verification result indicates that the quantified second object detection model is consistent with the second object detection model before quantization, convert a format of the quantified second object detection model to a format supported by the data collection device 1202 to obtain a format-converted second object detection model, and update the first object detection model in the data collection device 1202 to the format-converted second object detection model.

In an embodiment of the present disclosure, the self-training server 1201 is further configured to:
in response to determining to update the first object detection model in the data collection device 1202 to the second object detection model, update the first object detection model in the same class of data collection devices 1202 to the second object detection model, where the same class of data collection devices 1202 are data collection devices 1202 using the first object detection model.

In an embodiment of the present disclosure, the self-training server 1201 is specifically configured to:
train the first object detection model by using the first sample data and second sample data to obtain the second object detection model, where the second sample data is multimedia data input by a user via a client.

In an embodiment of the present disclosure, the self-training server 1201 is configured to obtain the target attribute by:
obtaining frequency of occurrence of candidate attributes, where the candidate attribute is attribute information of an object whose confidence level is lower than a preset confidence threshold in results obtained by detecting the objects in each of the multimedia data through the first object detection model; and
determining a candidate attribute whose frequency of occurrence reaches a preset frequency condition as the target attribute.

Referring to FIG. 13, FIG. 13 is a schematic structural diagram illustrating a self-training apparatus according to embodiment of the present disclosure, the apparatus includes:
a data obtaining module 1301, configured to obtain multimedia data collected by a data collection device, and obtain attribute information by detecting objects in the multimedia data through a first object detection model, where the first object detection model is a model currently used by the data collection device;
**a** data selecting module 1302, configured to select, based on the attribute information of the objects in the multimedia data, data containing an object with a target attribute from the multimedia data as first sample data, where the target attribute is an attribute of the object in the multimedia data whose accuracy of a detection result obtained when the first object detection model detects the objects in the multimedia data meets a preset self-training condition; and
a model training module 1303, configured to train the first object detection model by using the first sample data to obtain a second object detection model.

In an embodiment of the present disclosure, the apparatus further includes:
an accuracy testing module, configured to test, based on test data, accuracy of the second object detection model for object detection to obtain a test result, where the test data includes at least one of existing test data or new test data, the existing test data is data already used for testing accuracy of the first object detection model for object detection, and the new test data is unused test data; and
a result determination module, configured to determine, based on the test result, whether to update the first object detection model in the data collection device to the second object detection model.

In an embodiment of the present disclosure, the new test data includes at least one of:
data with label information input by a user via a client; or
data obtained by labelling candidate data by the user, where the candidate data is data extracted from the multimedia data collected by the data collection device.

In an embodiment of the present disclosure, the accuracy testing module is specifically configured to:
input the test data into the first object detection model for object detection to obtain a first output result, and input the test data into the second object detection model for object detection to obtain a second output result;
calculate a first difference value of the first output result relative to label information, and calculate a second difference value of the second output result relative to the label information, where the label information is information for pre-labelling the test data; and
obtain a determining result, by determining, based on the first difference value and the second difference value, whether the accuracy of the second object detection model for object detection is higher than the accuracy of the first object detection model for object detection, as the test result.

In an embodiment of the present disclosure, the apparatus further includes a first model update module, specifically configured to:
in response to determining to update the first object detection model in the data collection device to the second object detection model, quantify the second object detection model in accordance with a preset quantification method to obtain a quantified second object detection model;
verify consistency of the quantified second object detection model and the second object detection model before quantization by using preset verification data; and
in response to determining that a verification result indicates that the quantified second object detection model is consistent with the second object detection model before quantization, convert a format of the quantified second object detection model to a format supported by the data collection device to obtain a format-converted second object detection model, and update the first object detection model in the data collection device to the format-converted second object detection model.

**In** an embodiment of the present disclosure, the apparatus further includes a second model update module, specifically configured to:
in response to determining to update the first object detection model in the data collection device to the second object detection model, update the first object detection model in the same class of data collection devices to the second object detection model, where the same class of data collection devices are data collection devices using the first object detection model.

**In** an embodiment of the present disclosure, the model training module 1303 is specifically configured to:
train the first object detection model by using the first sample data and second sample data to obtain the second object detection model, where the second sample data is multimedia data input by a user via a client.

**In** an embodiment of the present disclosure, the apparatus further includes a target attribute determination module, specifically configured to obtain the target attribute by:
obtaining frequency of occurrence of candidate attributes, where the candidate attribute is attribute information of an object whose confidence level is lower than a preset confidence threshold in results obtained by detecting the objects in the multimedia data through the first object detection model; and
determining a candidate attribute whose frequency of occurrence reaches a preset frequency condition as the target attribute.

**When** training the object detection model by the self-training solution provided by the embodiments of the present disclosure, firstly, the multimedia data collected by the data collection device is obtained, and the attribute information is obtained by detecting objects in the multimedia data through the first object detection model. The first object detection model is a model currently used by the data collection device. Based on the attribute information of the objects in the multimedia data, data containing an object with the target attribute is selected from the multimedia data as the first sample data, where the target attribute is an attribute of the object in the multimedia data whose accuracy of a detection result obtained when the first object detection model detects the objects in the multimedia data meets a preset self-training condition. The first object detection model is trained by using the first sample data to obtain the second object detection model. This allows the first object detection model to be trained based on the multimedia data collected by the data collection device during the application of the first object detection model. Since the objects in the first sample data have the target attribute, and the target attribute can be understood as an attribute of the object in the multimedia data whose accuracy of a detection result is lower when the first object detection model detects the objects in the multimedia data, it also means that the first object detection model has lower accuracy of object detection for the multimedia data with the target attribute, so that the first object detection model can be trained by using the first sample data to improve the accuracy of the first object detection model for object detection of the multimedia data with the target attribute. Thus, the accuracy of object detection performed by the object detection model can be improved by applying the solution provided by the embodiments of the present disclosure.

An embodiment of the present disclosure provides an electronic device including a processor 1401, a communication interface 1402, a memory 1403, and a communication bus 1404, as shown in FIG. 14, the processor 1401, the communication interface 1402, and the memory 1403 complete communication with each other via the communication bus 1404.

The memory 1403 is configured to store computer programs.

The processor 1401 is configured to perform the self-training method when executing the computer programs stored on the memory 1403.

The communication bus involved in electronic device can be a peripheral component interconnect (PCI) bus or an extended industry standard architecture (EISA) bus, etc. The communication bus can include an address bus, a data bus, a control bus, etc. For the convenience of representation, only one thick line is used in figures, but it does not mean that there is only one bus or one type of bus.

The communication interface is used for communication between the electronic device and other devices.

The memory may include a random access memory (RAM), and may also include a non-volatile memory (NVM), such as at least one disk memory. Optionally, the memory may also be at least one storage device disposed away from the processor.

The processor may be a general purpose processor, including a central processing unit (CPU), a network processor (NP), etc., and may also be a digital signal processing (DSP), an application specific integrated circuit (ASIC), a field-programmable gate array (FPGA), or other programmable logic device, a discrete gate or a transistor logic device, a discrete hardware component.

**An** embodiment of the present disclosure provides a computer-readable storage medium storing computer programs, the computer programs are executed by a processor to perform the self-training method.

**An** embodiment of the present disclosure provides a computer program product including instructions that, instructions that, when running on a computer, causes the computer to execute the self-training method.

**In** embodiments, it can be implemented in whole or in part by software, hardware, firmware, or any combination thereof. When implemented in software, it can be implemented in whole or in part in the form of a computer program product. The computer program product includes one or more computer instructions. When computer program instructions are loaded and executed on a computer, the processes or function according to the examples of the present disclosure are generated in whole or in part. The computer can be a general-purpose computer, a dedicated computer, a computer network, or other programmable devices. Computer instructions can be stored in a computer-readable storage medium or transmitted from one computer-readable storage medium to another computer-readable storage medium, for example, the computer instructions can be transmitted from a website site, a computer, a trajectory prediction device or a data center via wire (For example, coaxial cable, optical fiber, digital subscriber line (DSL)) or wireless (for example, infrared, wireless, microwave, etc.) to another website, a computer, a trajectory prediction device, or a data center. The computer-readable storage medium can be any available medium that can be accessed by a computer or a data storage device including one or more available devices, data centers, and the like. Usable media can be magnetic media (e.g., floppy disk, hard disk, magnetic tape), optical media (e.g., DVD), or semiconductor media (e.g., solid state disk (SSD)), and so on.

When training the object detection model by the self-training solution provided by the embodiments of the present disclosure, firstly, the multimedia data collected by the data collection device is obtained, and the attribute information is obtained by detecting objects in the multimedia data through the first object detection model. The first object detection model is a model currently used by the data collection device. Based on the attribute information of the objects in the multimedia data, data containing an object with the target attribute is selected from the multimedia data as the first sample data, where the target attribute is an attribute of the object in the multimedia data whose accuracy of a detection result obtained when the first object detection model detects the objects in the multimedia data meets a preset self-training condition. The first object detection model is trained by using the first sample data to obtain the second object detection model. This allows the first object detection model to be trained based on the multimedia data collected by the data collection device during the application of the first object detection model. Since the objects in the first sample data have the target attribute, and the target attribute can be understood as an attribute of the object in the multimedia data whose accuracy of a detection result is lower when the first object detection model detects the objects in the multimedia data, it also means that the first object detection model has lower accuracy of object detection for the multimedia data with the target attribute, so that the first object detection model can be trained by using the first sample data to improve the accuracy of the first object detection model for object detection of the multimedia data with the target attribute. Thus, the accuracy of object detection performed by the object detection model can be improved by applying the solution provided by the embodiments of the present disclosure.

It is to be noted that the relational terms such as "first" and "second" used herein are merely intended to distinguish one entity or operation from another entity or operation rather than to require or imply any such actual relation or order existing between these entities or operations. Further, the term "including", "containing" or any variation thereof is intended to encompass non-exclusive inclusion, so that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

Each embodiment in the present disclosure is described in a progressive manner, and the same and similar parts between each embodiment may be referred to each other, and each embodiment focuses on the differences from other embodiments. In particular, with respect to the examples of the apparatus, system, electronic device, and non-volatile computer storage medium, since they are basically similar to the method examples, the description thereof is relatively simple. For the related parts, reference can be made to the description of the method examples.

The above are only embodiments of the present disclosure and are not intended to limit the present disclosure.

## Claims

1. A self-training method, comprising:
obtaining (101) multimedia data collected by a data collection device, and obtaining attribute information by detecting objects in the multimedia data through a first object detection model, wherein the first object detection model is a model currently used by the data collection device;
selecting (102), based on the attribute information of the objects in the multimedia data, data containing an object with a target attribute from the multimedia data as first sample data, wherein the target attribute is an attribute of the object in the multimedia data whose accuracy of a detection result obtained when the first object detection model detects the object in the multimedia data meets a preset self-training condition; and
training (103) the first object detection model by using the first sample data to obtain a second object detection model,
wherein the method further comprises:
testing (104), based on test data, accuracy of the second object detection model for object detection to obtain a test result, wherein the test data comprises at least one of existing test data or new test data, the existing test data is data already used for testing accuracy of the first object detection model for object detection, and the new test data is unused test data; and
determining, based on the test result, whether to update the first object detection model in the data collection device to the second object detection model;
wherein the testing (104), based on the test data, the accuracy of the second object detection model for object detection to obtain the test result comprises:
inputting the test data into the first object detection model for object detection to obtain a first output result, and inputting the test data into the second object detection model for object detection to obtain a second output result;
calculating a first difference value of the first output result relative to label information, and calculating a second difference value of the second output result relative to the label information, wherein the label information is information for pre-labelling the test data; and
obtaining a determining result, by determining, based on the first difference value and the second difference value, whether the accuracy of the second object detection model for object detection is higher than the accuracy of the first object detection model for object detection, as the test result;
wherein the target attribute is obtained by:
obtaining frequency of occurrence of candidate attributes, wherein the candidate attribute is attribute information of an object whose confidence level is lower than a preset confidence threshold in results obtained by detecting the objects in the multimedia data through the first object detection model; and
determining a candidate attribute whose frequency of occurrence reaches a preset frequency condition as the target attribute.

2. The method of claim 1, wherein the new test data comprises at least one of:
data with label information input by a user via a client; or
data obtained by labelling candidate data by the user, wherein the candidate data is data extracted from the multimedia data collected by the data collection device.

3. The method of claim 1, further comprising:
in response to determining to update the first object detection model in the data collection device to the second object detection model, quantifying the second object detection model in accordance with a preset quantification method to obtain a quantified second object detection model;
verifying consistency of the quantified second object detection model and the second object detection model before quantization by using preset verification data; and
in response to determining that a verification result indicates that the quantified second object detection model is consistent with the second object detection model before quantization, converting a format of the quantified second object detection model to a format supported by the data collection device to obtain a format-converted second object detection model, and updating the first object detection model in the data collection device to the format-converted second object detection model.

4. The method of claim 1, further comprising:
in response to determining to update the first object detection model in the data collection device to the second object detection model, updating the first object detection model in the same class of data collection devices to the second object detection model, wherein the same class of data collection devices are data collection devices using the first object detection model.

5. The method of any one of claims 1 to 4, wherein training the first object detection model by using the first sample data to obtain the second object detection model comprises:
training the first object detection model by using the first sample data and second sample data to obtain the second object detection model, wherein the second sample data is multimedia data input by a user via a client.

6. A self-training apparatus, comprising:
a data obtaining module (1301), configured to obtain multimedia data collected by a data collection device, and obtain attribute information by detecting objects in the multimedia data through a first object detection model, wherein the first object detection model is a model currently used by the data collection device;
a data selecting module (1302), configured to select, based on the attribute information of the objects in the multimedia data, data containing an object with a target attribute from the multimedia data as first sample data, wherein the target attribute is an attribute of the object in the multimedia data whose accuracy of a detection result obtained when the first object detection model detects the object in the multimedia data meets a preset self-training condition; and
a model training module (1303), configured to train the first object detection model by using the first sample data to obtain a second object detection model,
wherein the self-training apparatus further comprises:
an accuracy testing module, configured to test, based on test data, accuracy of the second object detection model for object detection to obtain a test result, wherein the test data comprises at least one of existing test data or new test data, the existing test data is data already used for testing accuracy of the first object detection model for object detection, and the new test data is unused test data; and
a result determination module, configured to determine, based on the test result, whether to update the first object detection model in the data collection device to the second object detection model;
wherein the accuracy testing module is specifically configured to:
input the test data into the first object detection model for object detection to obtain a first output result, and input the test data into the second object detection model for object detection to obtain a second output result;
calculate a first difference value of the first output result relative to the label information, and calculate a second difference value of the second output result relative to the label information, wherein the label information is information for pre-labelling the test data; and
obtain a determining result, by determining, based on the first difference value and the second difference value, whether the accuracy of the second object detection model for the object detection is higher than the accuracy of the first object detection model for object detection, as the test result;
wherein the self-training apparatus further comprises a target attribute determination module specifically configured to obtain the target attribute by: obtaining frequency of occurrence of candidate attributes, wherein the candidate attribute is attribute information of an object whose confidence level is lower than a preset confidence threshold in results obtained by detecting the objects in the multimedia data through the first object detection model; and determine a candidate attribute whose frequency of occurrence reaches a preset frequency condition as the target attribute.

7. The apparatus of claim 6, wherein the new test data comprises at least one of: data with label information input by a user via a client; or data obtained by labelling candidate data by the user, wherein the candidate data is data extracted from the multimedia data collected by the data collection device.

8. The apparatus of claim 6, further comprising a first model update module, specifically configured to: in response to determining to update the first object detection model in the data collection device to the second object detection model, quantify the second object detection model in accordance with a preset quantification method to obtain a quantified second object detection model; verify consistency of the quantified second object detection model and the second object detection model before quantization by using preset verification data; and in response to determining that a verification result indicates that the quantified second object detection model is consistent with the second object detection model before quantization, convert a format of the quantified second object detection model to a format supported by the data collection device to obtain a format-converted second object detection model, and update the first object detection model in the data collection device to the format-converted second object detection model; or

9. The apparatus of claim 6, further comprising a second model update module, specifically configured to: in response to determining to update the first object detection model in the data collection device to the second object detection model, update the first object detection model in the same class of data collection devices to the second object detection model, wherein the same class of data collection devices are data collection devices using the first object detection model.

10. The apparatus of any one of claims 6 to 9, wherein the model training module is specifically configured to: train the first object detection model by using the first sample data and second sample data to obtain the second object detection model, wherein the second sample data is multimedia data input by a user via a client.

11. A computer-readable storage medium storing computer programs, wherein the computer programs are executed by a processor to perform the method according to any one of claims 1 to 5.

## Patentansprüche

1. Selbsttrainingsverfahren, umfassend:
Erhalten (101) von Multimediadaten, die durch eine Datensammelvorrichtung gesammelt werden, und Erhalten von Attributinformationen durch Detektieren von Objekten in den Multimediadaten durch ein erstes Objektdetektionsmodell, wobei das erste Objektdetektionsmodell ein Modell ist, das gegenwärtig durch die Datensammelvorrichtung verwendet wird;
Auswählen (102), basierend auf den Attributinformationen der Objekte in den Multimediadaten, von Daten, die ein Objekt mit einem Zielattribut enthalten, aus den Multimediadaten als erste Sample-Daten, wobei das Zielattribut ein Attribut des Objekts in den Multimediadaten ist, dessen Genauigkeit eines Detektionsergebnisses, das erhalten wird, wenn das erste Objektdetektionsmodell das Objekt in den Multimediadaten detektiert, eine voreingestellte Selbstlernbedingung erfüllt; und
Trainieren (103) des ersten Objektdetektionsmodells durch Verwenden der ersten Sample-Daten, um ein zweites Objektdetektionsmodell zu erhalten,
wobei das Verfahren ferner umfasst:
Testen (104), basierend auf Testdaten, der Genauigkeit des zweiten Objektdetektionsmodells zur Objektdetektion, um ein Testergebnis zu erhalten, wobei die Testdaten mindestens eines von existierenden Testdaten oder neuen Testdaten umfassen, wobei die existierenden Testdaten Daten sind, die bereits zum Testen der Genauigkeit des ersten Objektdetektionsmodells zur Objektdetektion verwendet werden, und die neuen Testdaten unbenutzte Testdaten sind; und
Bestimmen, basierend auf dem Testergebnis, ob das erste Objektdetektionsmodell in der Datensammelvorrichtung auf das zweite Objektdetektionsmodell aktualisiert werden soll;
wobei das Testen (104), basierend auf den Testdaten, der Genauigkeit des zweiten Objektdetektionsmodells zur Objektdetektion, um das Testergebnis zu erhalten, umfasst:
Eingeben der Testdaten in das erste Objektdetektionsmodell zur Objektdetektion, um ein erstes Ausgabeergebnis zu erhalten, und Eingeben der Testdaten in das zweite Objektdetektionsmodell zur Objektdetektion, um ein zweites Ausgabeergebnis zu erhalten;
Berechnen eines ersten Differenzwerts des ersten Ausgabeergebnisses relativ zu Label-Informationen, und Berechnen eines zweiten Differenzwerts des zweiten Ausgabeergebnisses relativ zu den Label-Informationen, wobei die Label-Informationen Informationen zum Label-Vorkennzeichnen der Testdaten sind; und
Erhalten eines Bestimmungsergebnisses durch Bestimmen, basierend auf dem ersten Differenzwert und dem zweiten Differenzwert, ob die Genauigkeit des zweiten Objektdetektionsmodells zur Objektdetektion höher als die Genauigkeit des ersten Objektdetektionsmodells zur Objektdetektion ist, als das Testergebnis;
wobei das Zielattribut erhalten wird durch:
Erhalten einer Häufigkeit des Auftretens von Kandidatenattributen, wobei das Kandidatenattribut Attributinformationen eines Objekts ist, dessen Konfidenzniveau niedriger als ein voreingestellter Konfidenzschwellwert in Ergebnissen ist, die durch Detektieren der Objekte in den Multimediadaten durch das erste Objektdetektionsmodell erhalten werden; und
Bestimmen eines Kandidatenattributs, dessen Häufigkeit des Auftretens eine voreingestellte Häufigkeitsbedingung erreicht, als das Zielattribut.

2. Verfahren nach Anspruch 1, wobei die neuen Testdaten mindestens eines umfassen von:
Daten mit Label-Informationen, die von einem Benutzer über einen Client eingegeben werden; oder
Daten, die durch Label-Kennzeichnen von Kandidatendaten durch den Benutzer erhalten werden, wobei die Kandidatendaten Daten sind, die aus den Multimediadaten extrahiert werden, die durch die Datensammelvorrichtung gesammelt werden.

3. Verfahren nach Anspruch 1, ferner umfassend:
als Reaktion auf das Bestimmen, das erste Objektdetektionsmodell in der Datensammelvorrichtung auf das zweite Objektdetektionsmodell zu aktualisieren, Quantifizieren des zweiten Objektdetektionsmodells gemäß einem voreingestellten Quantifizierungsverfahren, um ein quantifiziertes zweites Objektdetektionsmodell zu erhalten;
Verifizieren der Konsistenz des quantifizierten zweiten Objektdetektionsmodells und des zweiten Objektdetektionsmodells vor der Quantifizierung durch Verwenden voreingestellter Verifizierungsdaten; und
als Reaktion auf das Bestimmen, dass ein Verifizierungsergebnis angibt, dass das quantifizierte zweite Objektdetektionsmodell mit dem zweiten Objektdetektionsmodell vor der Quantifizierung konsistent ist, Umwandeln eines Formats des quantifizierten zweiten Objektdetektionsmodells in ein Format, das durch die Datensammelvorrichtung unterstützt wird, um ein formatumgewandeltes zweites Objektdetektionsmodell zu erhalten, und Aktualisieren des ersten Objektdetektionsmodells in der Datensammelvorrichtung auf das formatumgewandelte zweite Objektdetektionsmodell.

4. Verfahren nach Anspruch 1, ferner umfassend:
als Reaktion auf das Bestimmen, das erste Objektdetektionsmodell in der Datensammelvorrichtung auf das zweite Objektdetektionsmodell zu aktualisieren, Aktualisieren des ersten Objektdetektionsmodells in derselben Klasse von Datensammelvorrichtungen auf das zweite Obj ektdetektionsmodell, wobei dieselbe Klasse von Datensammelvorrichtungen Datensammelvorrichtungen sind, die das erste Objektdetektionsmodell verwenden.

5. Verfahren nach einem der Ansprüche 1 bis 4, wobei das Trainieren des ersten Objektdetektionsmodells durch Verwenden der ersten Sample-Daten, um das zweite Objektdetektionsmodell zu erhalten, umfasst:
Trainieren des ersten Objektdetektionsmodells durch Verwenden der ersten Sample-Daten und zweiten Sample-Daten, um das zweite Objektdetektionsmodell zu erhalten, wobei die zweiten Sample-Daten Multimediadaten sind, die von einem Benutzer über einen Client eingegeben werden.

6. Selbsttrainingsvorrichtung, umfassend:
ein Datenerhaltungsmodul (1301), das eingerichtet ist, Multimediadaten zu erhalten, die durch eine Datensammelvorrichtung gesammelt werden, und Attributinformationen durch Detektieren von Objekten in den Multimediadaten durch ein erstes Objektdetektionsmodell zu erhalten, wobei das erste Objektdetektionsmodell ein Modell ist, das gegenwärtig durch die Datensammelvorrichtung verwendet wird;
ein Datenauswahlmodul (1302), das eingerichtet ist, basierend auf den Attributinformationen der Objekte in den Multimediadaten, Daten, die ein Objekt mit einem Zielattribut enthalten, aus den Multimediadaten als erste Sample-Daten auszuwählen, wobei das Zielattribut ein Attribut des Objekts in den Multimediadaten ist, dessen Genauigkeit eines Detektionsergebnisses, das erhalten wird, wenn das erste Objektdetektionsmodell das Objekt in den Multimediadaten detektiert, eine voreingestellte Selbstlernbedingung erfüllt; und
ein Modelltrainingsmodul (1303), das eingerichtet ist, das erste Objektdetektionsmodell durch Verwenden der ersten Sample-Daten zu trainieren, um ein zweites Objektdetektionsmodell zu erhalten,
wobei die Selbsttrainingsvorrichtung ferner umfasst:
ein Genauigkeitstestmodul, das eingerichtet ist, basierend auf Testdaten, die Genauigkeit des zweiten Objektdetektionsmodells zur Objektdetektion zu testen, um ein Testergebnis zu erhalten, wobei die Testdaten mindestens eines von existierenden Testdaten oder neuen Testdaten umfassen, wobei die existierenden Testdaten Daten sind, die bereits zum Testen der Genauigkeit des ersten Objektdetektionsmodells zur Objektdetektion verwendet werden, und die neuen Testdaten unbenutzte Testdaten sind; und
ein Ergebnisbestimmungsmodul, das eingerichtet ist, basierend auf dem Testergebnis zu bestimmen, ob das erste Objektdetektionsmodell in der Datensammelvorrichtung auf das zweite Objektdetektionsmodell aktualisiert werden soll;
wobei das Genauigkeitstestmodul insbesondere eingerichtet ist zum:
Eingeben der Testdaten in das erste Objektdetektionsmodell zur Objektdetektion, um ein erstes Ausgabeergebnis zu erhalten, und Eingeben der Testdaten in das zweite Objektdetektionsmodell zur Objektdetektion, um ein zweites Ausgabeergebnis zu erhalten;
Berechnen eines ersten Differenzwerts des ersten Ausgabeergebnisses relativ zu den Label-Informationen, und Berechnen eines zweiten Differenzwerts des zweiten Ausgabeergebnisses relativ zu den Label-Informationen, wobei die Label-Informationen Informationen zum Label-Vorkennzeichnen der Testdaten sind; und
Erhalten eines Bestimmungsergebnisses durch Bestimmen, basierend auf dem ersten Differenzwert und dem zweiten Differenzwert, ob die Genauigkeit des zweiten Objektdetektionsmodells zur Objektdetektion höher als die Genauigkeit des ersten Objektdetektionsmodells zur Objektdetektion ist, als das Testergebnis;
wobei die Selbsttrainingsvorrichtung ferner ein Zielattributbestimmungsmodul umfasst, das insbesondere eingerichtet ist, das Zielattribut zu erhalten durch: Erhalten einer Häufigkeit des Auftretens von Kandidatenattributen, wobei das Kandidatenattribut Attributinformationen eines Objekts ist, dessen Konfidenzniveau niedriger als ein voreingestellter Konfidenzschwellwert in Ergebnissen ist, die durch Detektieren der Objekte in den Multimediadaten durch das erste Objektdetektionsmodell erhalten werden; und Bestimmen eines Kandidatenattributs, dessen Häufigkeit des Auftretens eine voreingestellte Häufigkeitsbedingung erreicht, als das Zielattribut.

7. Vorrichtung nach Anspruch 6, wobei die neuen Testdaten mindestens eines umfassen aus: Daten mit Label-Informationen, die von einem Benutzer über einen Client eingegeben werden; oder Daten, die durch Label-Kennzeichnen von Kandidatendaten durch den Benutzer erhalten werden, wobei die Kandidatendaten Daten sind, die aus den Multimediadaten extrahiert werden, die durch die Datensammelvorrichtung gesammelt werden.

8. Vorrichtung nach Anspruch 6, ferner umfassend ein erstes Modellaktualisierungsmodul, das insbesondere eingerichtet ist zum: als Reaktion auf das Bestimmen, das erste Objektdetektionsmodell in der Datensammelvorrichtung auf das zweite Objektdetektionsmodell zu aktualisieren, Quantifizieren des zweiten Objektdetektionsmodells gemäß einem voreingestellten Quantifizierungsverfahren, um ein quantifiziertes zweites Objektdetektionsmodell zu erhalten; Verifizieren der Konsistenz des quantifizierten zweiten Objektdetektionsmodells und des zweiten Objektdetektionsmodells vor der Quantifizierung durch Verwenden voreingestellter Verifizierungsdaten; und als Reaktion auf das Bestimmen, dass ein Verifizierungsergebnis angibt, dass das quantifizierte zweite Objektdetektionsmodell mit dem zweiten Objektdetektionsmodell vor der Quantifizierung konsistent ist, Umwandeln eines Formats des quantifizierten zweiten Objektdetektionsmodells in ein Format, das durch die Datensammelvorrichtung unterstützt wird, um ein formatumgewandeltes zweites Objektdetektionsmodell zu erhalten, und Aktualisieren des ersten Objektdetektionsmodells in der Datensammelvorrichtung auf das formatumgewandelte zweite Objektdetektionsmodell; oder

9. Vorrichtung nach Anspruch 6, ferner umfassend ein zweites Modellaktualisierungsmodul, das insbesondere eingerichtet ist zum: als Reaktion auf das Bestimmen, das erste Objektdetektionsmodell in der Datensammelvorrichtung auf das zweite Objektdetektionsmodell zu aktualisieren, Aktualisieren des ersten Objektdetektionsmodells in derselben Klasse von Datensammelvorrichtungen auf das zweite Objektdetektionsmodell, wobei dieselbe Klasse von Datensammelvorrichtungen Datensammelvorrichtungen sind, die das erste Objektdetektionsmodell verwenden.

10. Vorrichtung nach einem der Ansprüche 6 bis 9, wobei das Modelltrainingsmodul insbesondere eingerichtet ist zum: Trainieren des ersten Objektdetektionsmodells durch Verwenden der ersten Sample-Daten und zweiten Sample-Daten, um das zweite Objektdetektionsmodell zu erhalten, wobei die zweiten Sample-Daten Multimediadaten sind, die von einem Benutzer über einen Client eingegeben werden.

11. Computerlesbares Speichermedium, das Computerprogramme speichert, wobei die Computerprogramme von einem Prozessor ausgeführt werden, um das Verfahren nach einem der Ansprüche 1 bis 5 durchzuführen.

## Revendications

1. Procédé d'auto-entraînement, comprenant :
l'obtention (101) de données multimédia collectées par un dispositif de collecte de données, et l'obtention d'informations d'attribut en détectant des objets dans les données multimédia grâce à un premier modèle de détection d'objet, dans lequel le premier modèle de détection d'objet est un modèle en train d'être utilisé par le dispositif de collecte de données ;
la sélection (102), sur la base des informations d'attribut des objets dans les données multimédia, de données contenant un objet ayant un attribut cible à partir des données multimédia comme premières données échantillons, dans lequel l'attribut cible est un attribut de l'objet dans les données multimédia dont la précision d'un résultat de détection obtenu lorsque le premier modèle de détection d'objet détecte l'objet dans les données multimédia satisfait une condition d'auto-entraînement prédéfinie ; et
l'entraînement (103) du premier modèle de détection d'objet en utilisant les premières données échantillons pour obtenir un second modèle de détection d'objet,
dans lequel le procédé comprend en outre :
le test (104), sur la base de données de test, de la précision du second modèle de détection d'objet pour la détection d'objet pour obtenir un résultat de test, dans lequel les données de test comprennent au moins l'une de données de test existantes ou de nouvelles données de test, les données de test existantes sont des données déjà utilisées pour tester la précision du premier modèle de détection d'objet pour la détection d'objet, et les nouvelles données de test sont des données de test inutilisées ; et
la détermination, sur la base du résultat de test, s'il faut actualiser le premier modèle de détection d'objet dans le dispositif de collecte de données vers le second modèle de détection d'objet ;
dans lequel le test (104), sur la base des données de test, de la précision du second modèle de détection d'objet pour la détection d'objet pour obtenir le résultat de test comprend :
l'entrée des données de test dans le premier modèle de détection d'objet pour la détection d'objet pour obtenir un premier résultat de sortie, et l'entrée des données de test dans le second modèle de détection d'objet pour la détection d'objet pour obtenir un second résultat de sortie ;
le calcul d'une première valeur de différence du premier résultat de sortie par rapport à des informations d'étiquetage, et le calcul d'une seconde valeur de différence du second résultat de sortie par rapport aux informations d'étiquetage, dans lequel les informations d'étiquetage sont des informations pour pré-étiqueter les données de test ; et
l'obtention d'un résultat de détermination, en déterminant, sur la base de la première valeur de différence et de la seconde valeur de différence, si la précision du second modèle de détection d'objet pour la détection d'objet est supérieure à la précision du premier modèle de détection d'objet pour la détection d'objet, comme étant le résultat de test ;
dans lequel l'attribut cible est obtenu par :
l'obtention d'une fréquence d'occurrence d'attributs candidats, dans lequel l'attribut candidat est une information d'attribut d'un objet dont le niveau de confiance est inférieur à un seuil de confiance prédéfini dans des résultats obtenus en détectant les objets dans les données multimédia grâce au premier modèle de détection d'objet ; et
la détermination d'un attribut candidat dont la fréquence d'occurrence atteint une condition de fréquence prédéfinie comme étant l'attribut cible.

2. Procédé selon la revendication 1, dans lequel les nouvelles données de test comprennent au moins l'un parmi :
des données avec des informations d'étiquetage entrées par un utilisateur via un dispositif client ; ou
des données obtenues en étiquetant des données candidates par l'utilisateur, dans lequel les données candidates sont des données extraites des données multimédia collectées par le dispositif de collecte de données.

3. Procédé selon la revendication 1, comprenant en outre :
en réponse à la détermination qu'il faut actualiser le premier modèle de détection d'objet dans le dispositif de collecte de données au second modèle de détection d'objet, la quantification du second modèle de détection d'objet conformément à un procédé de quantification prédéfini pour obtenir un second modèle de détection d'objet quantifié ;
la vérification de la cohérence du second modèle de détection d'objet quantifié et du second modèle de détection d'objet avant quantification en utilisant des données de vérification prédéfinies ; et
en réponse à la détermination qu'un résultat de vérification indique que le second modèle de détection d'objet quantifié est cohérent avec le second modèle de détection d'objet avant quantification, la conversion d'un format du second modèle de détection d'objet quantifié en un format pris en charge par le dispositif de collecte de données pour obtenir un second modèle de détection d'objet converti en format, et l'actualisation du premier modèle de détection d'objet dans le dispositif de collecte de données au second modèle de détection d'objet converti en format.

4. Procédé selon la revendication 1, comprenant en outre :
en réponse à la détermination qu'il faut actualiser le premier modèle de détection d'objet dans le dispositif de collecte de données au second modèle de détection d'objet, l'actualisation du premier modèle de détection d'objet dans la même classe de dispositifs de collecte de données au second modèle de détection d'objet, dans lequel la même classe de dispositifs de collecte de données sont des dispositifs de collecte de données utilisant le premier modèle de détection d'objet.

5. Procédé selon l'une quelconque des revendications 1 à 4, dans lequel l'entraînement du premier modèle de détection d'objet en utilisant les premières données échantillons pour obtenir le second modèle de détection d'objet comprend :
l'entraînement du premier modèle de détection d'objet en utilisant les premières données échantillons et les secondes données échantillons pour obtenir le second modèle de détection d'objet, dans lequel les secondes données échantillons sont des données multimédia entrées par un utilisateur via un dispositif client.

6. Appareil d'auto-entraînement, comprenant :
un module d'obtention de données (1301), configuré pour obtenir des données multimédia collectées par un dispositif de collecte de données, et obtenir des informations d'attribut en détectant des objets dans les données multimédia grâce à un premier modèle de détection d'objet, dans lequel le premier modèle de détection d'objet est un modèle en train d'être utilisé par le dispositif de collecte de données ;
un module de sélection de données (1302), configuré pour sélectionner, sur la base des informations d'attribut des objets dans les données multimédia, des données contenant un objet ayant un attribut cible à partir des données multimédia comme premières données échantillons, dans lequel l'attribut cible est un attribut de l'objet dans les données multimédia dont la précision d'un résultat de détection obtenu lorsque le premier modèle de détection d'objet détecte l'objet dans les données multimédia satisfait une condition d'auto-entraînement prédéfinie ; et
un module d'entraînement de modèle (1303), configuré pour entraîner le premier modèle de détection d'objet en utilisant les premières données échantillons pour obtenir un second modèle de détection d'objet,
dans lequel l'appareil d'auto-entraînement comprend en outre :
un module de test de précision, configuré pour tester, sur la base de données de test, la précision du second modèle de détection d'objet pour la détection d'objet pour obtenir un résultat de test, dans lequel les données de test comprennent au moins l'une de données de test existantes ou de nouvelles données de test, les données de test existantes sont des données déjà utilisées pour tester la précision du premier modèle de détection d'objet pour la détection d'objet, et les nouvelles données de test sont des données de test inutilisées ; et
un module de détermination de résultat, configuré pour déterminer, sur la base du résultat de test, s'il faut actualiser le premier modèle de détection d'objet dans le dispositif de collecte de données au second modèle de détection d'objet ;
dans lequel le module de test de précision est spécifiquement configuré pour :
entrer les données de test dans le premier modèle de détection d'objet pour la détection d'objet pour obtenir un premier résultat de sortie, et entrer les données de test dans le second modèle de détection d'objet pour la détection d'objet pour obtenir un second résultat de sortie ;
calculer une première valeur de différence du premier résultat de sortie par rapport aux informations d'étiquetage, et calculer une seconde valeur de différence du second résultat de sortie par rapport aux informations d'étiquetage, dans lequel les informations d'étiquetage sont des informations pour pré-étiqueter les données de test ; et
obtenir un résultat de détermination, en déterminant, sur la base de la première valeur de différence et de la seconde valeur de différence, si la précision du second modèle de détection d'objet pour la détection d'objet est supérieure à la précision du premier modèle de détection d'objet pour la détection d'objet, comme étant le résultat de test ;
dans lequel l'appareil d'auto-entraînement comprend en outre un module de détermination d'attribut cible spécifiquement configuré pour obtenir l'attribut cible en : obtenant une fréquence d'occurrence d'attributs candidats, dans lequel l'attribut candidat est une information d'attribut d'un objet dont le niveau de confiance est inférieur à un seuil de confiance prédéfini dans des résultats obtenus en détectant les objets dans les données multimédia grâce au premier modèle de détection d'objet ; et déterminer un attribut candidat dont la fréquence d'occurrence atteint une condition de fréquence prédéfinie comme étant l'attribut cible.

7. Appareil selon la revendication 6, dans lequel les nouvelles données de test comprennent au moins l'un parmi : des données avec des informations d'étiquetage entrées par un utilisateur via un dispositif client ; ou des données obtenues en étiquetant des données candidates par l'utilisateur, dans lequel les données candidates sont des données extraites des données multimédia collectées par le dispositif de collecte de données.

8. Appareil selon la revendication 6, comprenant en outre un premier module d'actualisation de modèle, spécifiquement configuré pour : en réponse à la détermination d'actualiser le premier modèle de détection d'objet dans le dispositif de collecte de données au second modèle de détection d'objet, quantifier le second modèle de détection d'objet conformément à un procédé de quantification prédéfini pour obtenir un second modèle de détection d'objet quantifié ; vérifier la cohérence du second modèle de détection d'objet quantifié et du second modèle de détection d'objet avant quantification en utilisant des données de vérification prédéfinies ; et en réponse à la détermination qu'un résultat de vérification indique que le second modèle de détection d'objet quantifié est cohérent avec le second modèle de détection d'objet avant quantification, convertir un format du second modèle de détection d'objet quantifié en un format pris en charge par le dispositif de collecte de données pour obtenir un second modèle de détection d'objet converti en format, et actualiser le premier modèle de détection d'objet dans le dispositif de collecte de données au second modèle de détection d'objet converti en format ; ou

9. Appareil selon la revendication 6, comprenant en outre un second module d'actualisation de modèle, spécifiquement configuré pour : en réponse à la détermination qu'il faut actualiser le premier modèle de détection d'objet dans le dispositif de collecte de données au second modèle de détection d'objet, actualiser le premier modèle de détection d'objet dans la même classe de dispositifs de collecte de données au second modèle de détection d'objet, dans lequel la même classe de dispositifs de collecte de données sont des dispositifs de collecte de données utilisant le premier modèle de détection d'objet.

10. Appareil selon l'une quelconque des revendications 6 à 9, dans lequel le module d'entraînement de modèle est spécifiquement configuré pour : entraîner le premier modèle de détection d'objet en utilisant les premières données échantillons et les secondes données échantillons pour obtenir le second modèle de détection d'objet, dans lequel les secondes données échantillons sont des données multimédia entrées par un utilisateur via un dispositif client.

11. Support de stockage lisible par ordinateur stockant des programmes informatiques, dans lequel les programmes informatiques sont exécutés par un processeur pour réaliser le procédé selon l'une quelconque des revendications 1 à 5.
